# EUROPEAN PATENT APPLICATION

(11) **EP 1 493 768 A1**
(43) Date of publication of application: **05.01.2005**
(21) Application number: 03101940.9
(22) Date of filing: 30.06.2003
(51) Int. Cl.: C08G 65/26, B01J 31/12

(54) **Novel process for manufacturing polyols and catalysts useful therefor**

(71) Applicant: HUNTSMAN INTERNATIONAL LLC, Salt Lake City, Utah 84108 (US)
(72) Inventor: Bosman, Joris Karel Peter, 2230 Herselt (BE)
(74) Representative: Moens, Marnix Karel Christiane

(57) **Abstract**

The invention provides a process for manufacturing polyetherpolyol, comprising the step of reacting a reactive hydrogen compound having at least 2 reactive hydrogens and a molecular weight less than 1000 with an alkylene oxide having between 2 and 4 carbon atoms in the presence of a metal rich complex catalyst comprising polyvalent anionic ligand derived from the corresponding oxo or oxothio or thio acid.

The invention also provides the polyol obtained by the process of the invention, a reactive mixture comprising at least one polyol of the invention and at least one isocyanate, a process for making polyurethane comprising reacting at least one polyol obtained by the process of the invention with at least one isocyanate, and the use of the polyol of the invention in the manufacture of polyurethane.

The invention finally provides specific anionic catalysts.

## Description

### FIELD OF THE INVENTION

This invention relates to a novel process for manufacturing polyols useful for the manufacture of polyurethane. The invention also provides specific catalysts that are useful for that purpose.

### BACKGROUND OF THE INVENTION

Polyols have been used in the manufacture of polyurethanes for many decades. Many processes have been developed for their manufacture; nonetheless there is still the need to develop new processes for their manufacture.

US-P-4453022 and US-P-4453023 discloses a process for manufacturing polyols for use as surfactants, where the starter is monofunctional, the catalyst being a strontium, calcium or barium derivative activated by an acid.

These documents however do not teach or suggest the present invention.

### SUMMARY OF THE INVENTION

The invention hence provides a process for manufacturing polyetherpolyol, comprising the step of reacting a reactive hydrogen compound having at least 2 reactive hydrogens and a molecular weight less than 1000 with an alkylene oxide having between 2 and 4 carbon atoms in the presence of a metal rich complex catalyst comprising polyvalent anionic ligand derived from the corresponding oxo or oxothio or thio acid.

The invention also provides the polyol obtained by the process of the invention, a reactive mixture comprising at least one polyol of the invention and at least one isocyanate, a process for making polyurethane comprising reacting at least one polyol obtained by the process of the invention with at least one isocyanate, and the use of the polyol of the invention in the manufacture of polyurethane.

The invention also provides specific anionic catalysts of formulas IIa and IIb.

### DETAILED DESCRIPTION OF THE INVENTION

Other objects, features and advantages will become more apparent after referring to the following specification

The reaction may be conducted in a conventional manner, that is, the reactive hydrogen compound and the catalyst are placed in a reactor, and the selected alkylene oxide is added to the reaction mixture until the desired number of moles has been reacted with the reactive hydrogen compound, and the product is removed from the reactor (and neutralized if needed). The reaction may be conducted in the presence of a solvent, which can be a neutral or basic medium. The process may be carried in a batch manner or in a continuous mode of operation; the reaction may also be carried out in a fluidized bed or fixed bed or transported bed reactor.

The temperature at which the reaction proceeds is not critical and generally products can be made at a reasonable rate of reaction at a temperature between about 50°C and about 250°C, with a temperature between about 80°C and about 200°C being generally preferred. While the pressure of the reaction is not critical when low-boiling epoxides, such as ethylene oxide and propylene oxide are employed, a pressurized reactor is preferably used. The alkylene oxide pressure, in general, is between 0.5 and 50 bars, preferably between 2 and 10 bars.

The active hydrogen compounds or initiators contain a plurality (esp. from 2 to 8) of active hydrogen atoms and include water, butanediol, ethylene glycol, propylene glycol, diethylene glycol, triethylene glycol, dipropylene glycol, and prepolymers of these glycols, ethanolamine, diethanolamine, triethanolamine, toluene diamine, diethyl phenylene diamine, toluene diamine, diphenylmethane diamine, ethylene diamine, cyclohexane diamine, cyclohexane dimethanol, resorcinol, bisphenol A, glycerol, trimethylolpropane, 1,2,6-hexanetriol, pentaerythritol, sorbitol, sucrose and alphamethylglucoside. Mixtures of initiators may be used. Especially useful initiators are diols and triols. The initiator has a MW below 1000, preferably below 500, most preferably below 300. Preferred initiators are glycerol, diethylene glycol, dipropylene glycol, triethylene glycol or mixtures thereof.

The reaction product may be neutralized and/or removed by known techniques, such as the addition of magnesium silicate, ion-exchange, acid neutralisation and crystallisation, extraction.

Alkylene oxides which may be employed in accordance with the invention include those alkylene oxides having between about 2 and about 4 carbon atoms and include, for example, ethylene oxide, 1,2-propylene oxide, butylene oxides such as 1,2-butylene oxide, as well as cyclic oxide such as tetrahydrofuran, and mixtures thereof. Styrene oxide (and is considered for the purpose of this invention as an alkylene oxide) can also be used, optionally in admixture with the alkylene oxide above. The number of moles of alkylene oxides employed according to the present invention may vary within broad limits, but will generally be comprised between 1 and 60, preferably between 2 and 50 per mole of active hydrogen of the initiator.

In one embodiment, the alkylene oxide is propylene oxide (PO). In another embodiment, the alkylene oxide is ethylene oxide (EO). It is possible to cause to react a mixture of PO and EO, esp. with molar ratios PO/EO from 5/95 to 95/5. The polyol thus obtained would then be a PO/EO block copolymer. It is also possible to first react PO, then EO. The final polyol will then be "EO-tip" or "EO-capped". It is also possible to first react a mixture PO/EO, then EO. It is also possible to first react PO, then a mixture PO/EO, and finally EO. Any combination is possible. The EO-tip content may vary from 1 to 50wt%, preferably from 10 to 30wt%.

Hence, the process of the invention offers, *inter alia,* the following routes:
- reacting in a first step the reactive hydrogen compound with a metal precursor, followed by the step of adding an oxy or thiooxy or thio acid, either in the free acid form or its salt form, followed by adding the alkylene oxide.
- a first step of reacting propylene oxide, followed by a step of reacting ethylene oxide.
- a first step of reacting ethylene oxide, followed by a step of reacting propylene oxide.
- reacting a mixture of propylene oxide and ethylene oxide.
- a first step of reacting a mixture of propylene oxide and ethylene oxide, followed by a step of reacting ethylene oxide.
- a first step of reacting a mixture of propylene oxide and ethylene oxide, followed by a step of reacting propylene oxide.
- a first step of reacting propylene oxide, followed by a step of reacting a mixture of propylene oxide and ethylene oxide, and followed by a step of reacting ethylene oxide.
- a first step of reacting ethylene oxide, followed by a step of reacting a mixture of propylene oxide and ethylene oxide, and followed by a step of reacting propylene oxide.

In the process of the invention, the reaction of an alkylene oxide with a reactive hydrogen compound is carried out in the presence of a catalyst. This catalyst is used according to variable amounts, for example between about 0.01 and about 5 weight percent, based upon the final weight of the polyol.

The catalyst that is used is preferably a metal rich complex catalyst that can be defined as a species which is ligand deficient and has metals more than the complexing polyvalent oxo/thiooxo/thio ligand on mole basis. This catalyst can be precipitated on inorganic or organic surfaces and used as heterogeneous catalyst. Suitable surfaces include organic polymers, carbon and their allotropes, metal silicates, metal oxides (non-reactive, such as alumina), metal nitrides, insoluble metal salts or mixture thereof. In some aspects, the reaction is believed to take place through a metal-rich multinuclear complex which may be referred to as a metal cluster.

The catalyst system could be a mixture of mononuclear or polynuclear complexes. The ratios of each complex may vary depending on the levels of each complex and the polyvalent ligands used.

In one aspect, the catalyst is a neutral cluster. In another aspect, the catalyst is an anionic cluster.

In the first aspect, the catalyst may have the following formula I:

MₐL¹ _{b}L² _{c}L³ _{d}

in which:
M is a di, tri or tetravalent metal or a mixture of at least 2 metals
a is 2 or more
L¹ is a neutral or anionic ligand or a mixture of any of these
b is 0 or an integer
L² is a neutral or anionic ligand or a mixture of any of these
c is 0 or an integer
at least one of b and c is not zero
L³ is an oxo or oxothio or thio acid ligand or a mixture of any of these
d is an integer of 1 or more.

The various values of a, b, c and d, as well as the valence of the metal are such that the final composition is neutral. Preferably, d is lower than a.

M is preferably a metal selected from group IIA and IIB, IIIA and IIIB, group IV, transition metals or mixture thereof. Preferred metals are Ba, Ca, Sr, Zn, Mg, Al, La, Zr, Ti, Sn.

Examples of neutral ligands are alcohols (esp. C1-C6 straight or branched alkanols), polyols (particularly those derived from the initiator) amines (esp. C1-C6 amines), amides (esp. C1-C6 amides), ethers (esp. di-C1-C6 ethers), alkylene oxide having between 2 and 4 carbon atoms, thioethers and thiols or mixtures thereof.

Examples of anionic ligands are alkylcarboxylates such as acetate, alkoxides (esp. C1-C12 alkoxides, notably multifunctional alkoxides, and particularly those derived from the initiator or alkoxylated initiator, see below, or mixtures thereof.

Examples of oxy or thiooxy or thio acid ligand derives from the corresponding oxy or thiooxy or thio acid. Partial esters thereof are also suitable, as well as mixtures thereof, as long as there is a free acid available.

In the second aspect, the catalyst may have the following formula II:

MₐL¹ _{b}L² _{c}L³ _{d}) C_{z}

in which:
M is a di, tri or tetravalent metal or a mixture of at least 2 metals
a is 2 or more
L¹ is a neutral or anionic ligand or a mixture of any of these
b is 0 or an integer
L² is a neutral or anionic ligand or a mixture of any of these
c is 0 or an integer
at least one of b and c is not zero
L³ is an oxo or oxothio or thio acid ligand or a mixture of any of these
d is an integer of 1 or more,
C is a cation or a mixture of cations,
z is such that the cationic charge is equal to the anionic charge of the group (MₐL¹_{b}L²_{c}L³_{d}) .

M, the ligands and each of a, b, c and d have the same definition than in formula I above. Preferably, d is lower than a.

C is cation, which can be inorganic (e.g. sodium salt), or organic (e.g. ammonium or phosphonium salts or mixture thereof) or mixtures thereof.

The various values of a, b, c and d, as well as the valence of the metal are such that there is a balance between the anionic charge and the cationic charge induced by the cation. The anionic charge equals the cation valence times z.

A preferred anionic catalyst is of the formula II in which C is an organic cation (formula IIa), or is of the formula II in which M is different from barium, calcium or strontium (formula IIb).

A preferred catalyst (for all formulas) is one in which one of the ligands is anionic and is an alkoxylate derived from the initiator. For example, in case of glycerol, the ligand will be glycerolate or alkoxylated glycerol or mixtures thereof.

A preferred catalyst (for all formulas) is one comprising at least one anionic ligand.

In one embodiment, in the formulas I or II, M is a metal selected from group IIA and IIB, IIIA and IIIB, group IV, transition metals or mixture thereof, and preferably M is Ba, Ca, Sr, Zn, Mg, Al, La, Zr, Ti, Sn.

In another embodiment, in formula II, M is barium, calcium, strontium, magnesium, lanthanum, zinc, aluminium or a mixture of any of these, and C is an organic cation or a mixture of organic cations.

In a further embodiment, one of the neutral and/or anionic ligands originates from the reactive hydrogen compound.

The metal compounds that can be selected for the preparation of the catalysts of the invention include pure metals, metal hydroxides, hydrides, alkoxides, aryloxides, alkanoates, carbonates, oxides, halides, nitrates, sulphides, sulphites, organometallic compounds or mixtures thereof.

Acid (acid complexing agent) can be selected from the group consisting of sulphuric acid, sulphurous acid, organic sulfonic acid (in particular alkylsulfonic, arylsulfonic and alkylarylsulfonic acids such as p-toluenesulfonic acid and dodecylbenzenesulfonic acid), polymeric sulfonic acid, phosphoric acid, polyphosphoric acid, phosphorous acid, nitric acid, boric acid, polyboric acid, metaphosphoric acid, organic phosphoric acid, organic phosphate, thiosulphuric acid, thiosulfonic acid, thiophosphoric acid, polythiophosphoric acid, arsenic acid, molybdic acid, tungstic acid, silicic acid, antimonic acid, carboxylic acid, polycarboxylic acid, triflic acid, carbonic acid, halogenated sulfonic and carbonic and phosphoric and carboxylic acids, or mixture thereof. Monomer or polymer having at least one acidic group is also suitable. Polymeric sulfonic acid is an organic polymer having at least one sulfonic acid group to form a salt or complex with metal.

The salt can be an onium salt, e.g. sulfonium, carbonium, ammonium, etc, as well as inorganic salt, and mixed salt. Examples of salts are tetrabutylammonium dihydrogenphosphate, tetrabutylammonium hydrogensulphate, tetrabutylammonium borate, tetrabutylphosphonium hydrogensulphate, bis(tetraethylammonium) carbonate, sodium dihydrogensulphate.

The reaction can be carried out in presence of a coordinating or non-coordinating solvent and/or in the presence of a stabiliser or organic or inorganic accelerator. The catalyst can then, and preferably is, be complexed with neutral or anionic organic ligands.

In one preferred embodiment, the catalyst is formed in situ, by first adding a metal precursor that will react with the initiator (the reactive hydrogen compound), and then adding the acid (free form or salt form).

In a further embodiment, one of the neutral and/or anionic ligands originates from the reactive hydrogen compound.

The instant process offers various advantages.

The process of the invention allows using glycerol as an initiator without any catalyst induction.

The process of the invention also affords cost savings, in as much as it does not involve expensive metal removal steps.

The process of the invention offers EO-capped polyols with low unsaturation and preferably low levels of volatile compounds.

In general, the unsaturation value of the polyols obtained by the process of the invention is typically below 0.1 meq/g, and generally lies between 0.01 and 0.08 meq/g.

The polyols prepared by the instant process are, in general, high molecular weight polyols, with MWs ranging from, e.g., 1000 to 10,000 g/mole.

The polyols prepared by the instant process can have, in general, hydroxyl values (OHv) ranging from 10 to more than 100 mgKOH/g.

The polyols prepared by the instant process can have, in general, primary OH values ranging from 0 up to 95%.

The polyols prepared by the instant process have, in general, a low viscosity (typically from 400 to 1600 cps and a narrow weight distribution (with a polydispersity index typically from 1.01 to 1.4).

The instant polyols can be used in the manufacture of polyurethanes by reaction with classical isocyanates, according to methods known in the art. See for example Polyurethanes Handbook 2^{nd} edition, G. Oertel, 1994.

For example, the suitable organic polyisocyanates for use in the invention include any of those known in the art for the preparation of polyurethanes, and may be selected from aromatic, aliphatic, cycloaliphatic and araliphatic polyisocyanates.

The following examples illustrate the invention without limiting it.

### EXAMPLES

### Example 1 (Neutral catalyst).

Into a 1L reactor equipped with a thermocouple, oil circulation jacket, mechanical stirrer, a gaz purge inlet and a propylene oxide inlet was added 150 g (1.63 mol) of glycerol and 31.97g of Ba(OH)₂.8H₂O (0.1014 mol). The resulting mixture was heated to 100°C under vacuum to remove water until the water level reached < 0.05 wt%. The reactor was then purged with nitrogen to atmospheric pressure. Then 0.36 g (0.0019 mol) p-toluene sulfonic acid monohydrate was added and stirred for 0.5 h during which time some precipitation of p-toluene sulfonate adduct was formed. The temperature was then raised to 110°C and 650g of PO was polymerised at a pressure of 3.5 bar (hydroxyl value = 343mgKOH/g). After completion of the reaction the residual propylene oxide was removed under reduced pressure. The reactor was then cooled to 60°C and discharged 650 g condensate from the reactor. Then the reactor was heated to 110°C under nitrogen pressure of 1 bar and 606 g of propylene oxide was polymerised at 4.5 bar pressure to give a polyol with hydroxyl value of 68 mgKOH/g (Mn~2475). The residual propylene oxide was stripped under vacuum at 110°C. The resulting mixture was discharged at 60°C and neutralised with magnesium silicate to give a colourless polyol. The terminally unsaturated compounds were 0.025 meq/g.

### Example 2 (Anionic catalyst) .

Initiator is prepared as in example 1 up to the nitrogen blanket step. Then 0.01 mol of tetrabutylammonium hydrogen sulphate solid was added to the reactor through the manhole and the mixture was purged with nitrogen. Then the resulting mixture was stirred for 0.5 h under vacuum at 100°C which was followed by nitrogen purge to a pressure of 1 bar. Then the temperature was raised to 100°C and 650g of propylene oxide was polymerised at 4 bar. After completion of the reaction, the resulting mixture was then vacuum stripped to remove residual propylene oxide from the reactor. Then the polyol was cooled to 60°C and 650 g of the polyol (hydroxyl value 343 mgKOH/g) was discharged under nitrogen blanket. The remaining polyol was further polymerised with 309 g of propylene oxide at 110°C and 4.5 bar to give a polyol with hydroxyl value of 112 mgKOH/g. The mixture after removal of residual propylene oxide was cooled to 60°C and discharged 309 g of polyol. The remaining polyol was again polymerised with 223 g of propylene oxide at 110°C and 4.5 bar to give a polyol of hydroxyl value of 45 mgKOH/g. The residual propylene oxide was removed under vacuum and the polyol was cooled to ambient temperature followed by neutralisation with magnesium silicate to yield a colourless transparent polyol.The terminal unsaturated compounds were 0.040meq/g

### Examples 3-14 (Neutral catalyst).

Examples 3-14, carried out as in example 1 are summarised in the table below.

| **Ex.** | **Metal** | **Oxyacids** | **TEMP** | **OHv** |
|---|---|---|---|---|
| | **Mole** | **mole** | **°C** | **mg KOH/g** |
| 3 | 0.1014 Ba(OH)2 | 0.0019 PTSA | 110 | 68 |
| 4 | 0.1014 Ba(OH)2 | 0.0014 triflic acid | 110 | 88 |
| 5 | 0.0507 Ba(OH)2 | 0.0044 triflic acid | 110 | 645 |
| 6 | 0.0507 Ba(OH)2 | 0.0053 triflic acid | 110 | 135 |
| 7 | 0.1014 Ba(OH)2 | 0.0044 triflic acid | 100 | 94 |
| 8 | 0.1014 Ba(OH)2 | 0.0027 phosphoric acid | 90/110 | 113 |
| 9 | 0.1014 Ba(OH)2 | 0.0021 DBSA | 90/110 | 82 |
| 10 | 0.1014 Ba(OH)2 | 0.0021 DBSA | 110 | 76 |
| 11 | 0.1029 Ba(OH)2 | 0.0042 DBSA | 100/11 0 | 62 |
| 12 | 0.1036 Ba(OH)2 | 0.0021 PPA | 100/11 0 | 88 |
| 13 | 0.1026 Ba(OH)2 | 0.0021 Citric acid | 110 | 95 |
| 14 | 0.1014 Ba(OH)2 | 0.0020 Boric acid | 110 | 84 |
| PTSA p-toluene sulphonic acid | | | | |
| DBSA dodecylbenzenesulphonic acid | | | | |
| PPA phenylphosphonic acid | | | | |

### Examples 15-23 (Anionic catalyst).

Examples 15-23, carried out as in example 2 are summarised in the table below.

| **Ex.** | **Metal** | **Oxyacids** | **TEMP** | **OHv** |
|---|---|---|---|---|
| | **Mole** | **Mole** | **°C** | **mg KOH/g** |
| 15 | 0.1014 Ba(OH)2 | 0.01 TBAS | 100/110 | 45 |
| 16 | 0.1014 Ba(OH)2 | 0.0020 TBAP | 100/110 | 85 |
| 17 | 0.1014 Sr(OH)2 | 0.0020 TBAP | 110 | 574 |
| 18 | 0.1012 Ba(OH)2 | 0.0100 TBAP | 110 | 86 |
| 19 | 0.1024 Ba(OH)2 | 0.0021 TEAC | 110 | 84 |
| 20 | 0.1097 Ba(OH)2 | 0.0022 TBAB | 110 | 84 |
| 21 | 0.1012 Ba(OH)2 | 0.0020 TBPS | 110 | 85 |
| 22 | 0.1019 Ca(OEt)2 | 0.0338 TBAP | 110 | 457 |
| 23 | 0.1015 Ca(OEt)2 | 0.0328 TEAC | 110 | 553 |
| TBAS tetrabutylammonium hydrogensulphate | | | | |
| TBAP tetrabutylammonium dihydrogenphosphate | | | | |
| TEAC bis(tetraetylammonium) carbonate | | | | |
| TBAB tetrabutylammonium borate | | | | |
| TBPS Tetrabutylphosphonium hydrogensulfate | | | | |

## Claims

1. A process for manufacturing polyetherpolyol, comprising the step of reacting a reactive hydrogen compound having at least 2 reactive hydrogens and a molecular weight less than 1000 with an alkylene oxide having between 2 and 4 carbon atoms in the presence of a metal rich complex catalyst comprising polyvalent anionic ligand derived from the corresponding oxo or oxothio or thio acid.

2. The process of claim 1, in which the catalyst is a neutral metal cluster.

3. The process of claim 1, in which the catalyst is an anionic metal cluster.

4. The process of claim 2, in which the neutral metal cluster is of the following formula I:
MₐL¹ _{b}L² _{c}L³ _{d}
in which:
M is a di, tri or tetravalent metal or a mixture of at least 2 metals
a is 2 or more
L¹ is a neutral or anionic ligand or a mixture of any of these
b is 0 or an integer
L² is a neutral or anionic ligand or a mixture of any of these
c is 0 or an integer
at least one of b and c is not zero
L³ is an oxo or oxothio or thio acid ligand or a mixture of any of these
d is an integer of 1 or more.

5. The process of claim 3, in which the anionic metal cluster is of the following formula II:
(MₐL¹ _{b}L² _{c}L³ _{d}) C_{z}
in which:
M is a di, tri or tetravalent metal or a mixture of at least 2 metals
a is 2 or more
L¹ is a neutral or anionic ligand or a mixture of any of these
b is 0 or an integer
L² is a neutral or anionic ligand or a mixture of any of these
c is 0 or an integer
at least one of b and c is not zero
L³ is an oxo or oxothio or thio acid ligand or a mixture of any of these
d is an integer of 1 or more,
C is a cation or a mixture of cations,
z is such that the cationic charge is equal to the anionic charge of the group (MₐL¹_{b}L²_{c}L³_{d}) .

6. The process of claim 4 or 5, in which d is lower than a.

7. The process of any one of claims 4 to 6, in which, in the formulas I or II, M is a metal selected from group IIA and IIB, IIIA and IIIB, group IV, transition metals or mixture thereof, and preferably M is Ba, Ca, Sr, Zn, Mg, Al, La, Zr, Ti, Sn.

8. The process of any one of claims 4 to 7, in which the neutral ligand is an alcohol, a polyol, an amine, an amide, an ether, an alkylene oxide, a thioether, a thiol, or mixtures thereof.

9. The process of any one of claims 4 to 8, in which the anionic ligand is an alkylcarboxylate or an alkoxide, or mixtures thereof.

10. The process of any one of claims 4 to 9, in which the oxo or oxothio or thio acid ligand derives from an acid selected from the group consisting of sulphuric acid, sulphurous acid, organic sulfonic acid preferably alkylsulfonic, arylsulfonic and alkylarylsulfonic acids, polymeric sulfonic acid, phosphoric acid, polyphosphoric acid, phosphorous acid, nitric acid, boric acid, polyboric acid, metaphosphoric acid, organic phosphoric acid, organic phosphate, thiosulphuric acid, thiosulfonic acid, thiophosphoric acid, polythiophosphoric acid, arsenic acid, molybdic acid, tungstic acid, silicic acid, antimonic acid, carboxylic acid, polycarboxylic acid, triflic acid, carbonic acid, halogenated sulfonic and carbonic and phosphoric and carboxylic acids, and mixtures thereof.

11. The process of any one of claims 5 to 10, in which in formula II, C is an ammonium salt, a phosphonium salt, or a mixture thereof.

12. The process of any one of claims 5 to 11, in which, in formula II:
M is barium, calcium, strontium, magnesium, lanthanum, zinc, aluminium or a mixture of any of these
C is an organic cation or a mixture of organic cations.

13. The process of any one of claims 2 to 12, in which the metal cluster is manufactured *in situ.*

14. The process of any one of claims 4 to 13, in which the metal cluster comprises at least one anionic ligand.

15. The process of any one of claims 4 to 14, in which one of the neutral and/or anionic ligands originates from the reactive hydrogen compound.

16. The process of any one of claims 1 to 15, in which the reactive hydrogen compound is glycerol, diethylene glycol, dipropylene glycol, triethylene glycol or mixtures thereof.

17. The process of any one of claims 1 to 16, comprising reacting in a first step the reactive hydrogen compound with a metal precursor, followed by the step of adding an oxy or thiooxy or thio acid, either in the free acid form or its salt form, followed by adding the alkylene oxide.

18. The process of any one of claims 1 to 17, comprising a step of reacting a mixture of propylene oxide and ethylene oxide.

19. The process of any one of claims 1 to 17, comprising a first step of reacting propylene oxide, followed by a step of reacting ethylene oxide.

20. The process of any one of claims 1 to 17, comprising a first step of reacting ethylene oxide, followed by a step of reacting propylene oxide.

21. The process of any one of claims 1 to 17, comprising a first step of reacting a mixture of propylene oxide and ethylene oxide, followed by a step of reacting ethylene oxide.

22. The process of any one of claims 1 to 17, comprising a first step of reacting a mixture of propylene oxide and ethylene oxide, followed by a step of reacting propylene oxide.

23. The process of any one of claims 1 to 17, comprising a first step of reacting propylene oxide, followed by a step of reacting a mixture of propylene oxide and ethylene oxide, and followed by a step of reacting ethylene oxide.

24. The process of any one of claims 1 to 17, comprising a first step of reacting ethylene oxide, followed by a step of reacting a mixture of propylene oxide and oxide, and followed by a step of reacting propylene oxide.

25. The process of any one of claims 1 to 24, carried out at a temperature between 50°C and 250°C, preferably between 80°C and 200°C.

26. The process of any one of claims 1 to 25, carried out at a pressure between 0.5 and 50 bar, preferably between 2 and 10 bar.

27. The process of any one of claims 1 to 26, in which the catalyst concentration is between 0.01 and 5 weight percent, based upon the final weight of the polyol.

28. The polyol obtained by the process of any one of claims 1 to 27.

29. A reactive mixture comprising at least one polyol of the claim 28 and at least one isocyanate.

30. A process for making polyurethane comprising reacting at least one polyol obtained by the process of any one of claims 1 to 27 with at least one isocyanate.

31. Use of the polyol of claim 28 in the manufacture of polyurethane.

32. An anionic metal cluster of the following formula IIa:
(MₐL¹ _{b}L² _{c}L³ _{d}) Cz :
in which:
M is a di, tri or tetravalent metal or a mixture of at least 2 metals
a is 2 or more
L¹ is a neutral or anionic ligand or a mixture of any of these
b is 0 or an integer
L² is a neutral or anionic ligand or a mixture of any of these
c is 0 or an integer
at least one of b and c is not zero
L³ is an oxo or oxothio or thio acid ligand or a mixture of any of these
d is an integer of 1 or more,
C is an organic cation or a mixture of organic cations,
z is such that the cationic charge is equal to the anionic charge of the group (MₐL¹_{b}L²_{c}L³_{d}) .

33. An anionic metal cluster of the following formula IIb:
(MₐL¹ _{b}L² _{c}L³ _{d}) Cz :
in which:
M is a di, tri or tetravalent metal, or a mixture of at least 2 metals with the proviso that M is not barium, calcium or strontium
a is 2 or more
L¹ is a neutral or anionic ligand or a mixture of any of these
b is 0 or an integer
L² is a neutral or anionic ligand or a mixture of any of these
c is 0 or an integer
at least one of b and c is not zero
L³ is an oxo or oxothio or thio acid ligand or a mixture of any of these
d is an integer of 1 or more,
C is a cation or a mixture of cations,
z is such that the cationic charge is equal to the anionic charge of the group (MₐL¹_{b}L²_{c}L³_{d}) .

34. The anionic metal cluster of claim 32 or 33, containing at least one anionic ligand.

35. The anionic metal cluster of any one of claims 32 to 34, in which in formulas IIa or IIb, d is lower than a.
